# EUROPÄISCHE PATENTSCHRIFT

(11) **EP 0 913 602 B1**
(45) Veröffentlichungstag und Bekanntmachung des Hinweises auf die Patenterteilung: **04.12.2002**
(21) Anmeldenummer: 98117549.0
(22) Anmeldetag: 16.09.1998
(51) Int. Cl.: F16H 41/24, B60K 1/00, F16D 1/06

(54) **Drehmomentwandleranbindung**
Connection for a hydrokinetic torque converter
Connexion pour un convertisseur de couple hydrodynamique

(30) Priorität: 30.10.1997 DE 19747962
(43) Veröffentlichungstag der Anmeldung: 06.05.1999
(73) Patentinhaber: Bayerische Motoren Werke Aktiengesellschaft, 80788 München (DE)
(72) Erfinder: Neuner, Josef, 83064 Raubling (DE)

(56) Entgegenhaltungen:
- US-A- 3 845 622
- US-A- 5 822 987

## Beschreibung

Die vorliegende Erfindung betrifft eine Antriebsverbindung zur Drehmomentübertragung gemäß dem Oberbegriff des Patentanspruches 1.

Aus der gattungsgemäßen US 38 45 622 ist eine Welle-Nabenverbindung bekannt, bei der ein Wellenstummel über eine Keilverzahnung mit einer Nabe verbunden ist. Ferner ist ein Schraubbolzen vorgesehen, der die Nabe in Axialrichtung gegen einen Wellenabsatz drückt.

Aus der US 5 822 987 ist eine Welle-Nabenverbindung bekannt, bei der die Welle ebenfalls über eine Keilverzahnung mit der Nabe verbunden ist. Die miteinander in Eingriff stehenden Längsseiten der Zähne sind abgeschrägt und zwar so dass die azimutale Zahnbreite in Radialrichtung variiert.

Ferner ist bekannt, einen Drehmomentwandler über eine Mitnehmerscheibe mit einer Kurbelwelle zu verbinden. Die DE 195 22 869 A1 beschreibt eine solche Mitnehmerscheibe, die so gestaltet ist, daß sich die Verbindungsschrauben zwischen Mitnehmerscheibe und Drehmomentwandler zur leichteren Montage in radialer Richtung erstrecken.

Eine Verbindung von Kurbelwelle und Drehmomentwandler über eine Mitnehmerscheibe erfordert grundsätzlich aufwendige Montagearbeiten.

### [Aufgabe der Erfindung]

Deshalb ist es Aufgabe der Erfindung, eine lösbare Verbindung zwischen einem Drehmomentwandler und einer Kurbelwelle bereitzustellen, die einfach montiert werden kann und die zumindest während der Drehmomentübertragung spielfrei ist.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung ist im Antriebsstrang eines Kraftfahrzeugs eine Antriebsverbindung zur Drehmomentübertragung durch eine mit Längsverzahnungen versehene Wellen-Nabenverbindung für lösbares Verbinden einer Kurbelwelle mit einem gleichachsig angeordneten hydrodynamischen Drehmomentwandler vorgesehen, wobei die Längsverzahnungen der Wellen-Nabenverbindung in Längsrichtung der Zähne sich vergrößernde bzw. verkleinernde Zahnquerschnitte besitzen.

Eine Längsverzahnung mit einer solchen axial konischen Zahnform an Welle und Nabe hat den Vorteil, daß bei axialer Vorspannung Spielfreiheit entsteht. Außerdem ist eine Verbindung zwischen einer Kurbelwelle und einem gleichachsig angeordneten hydrodynamischen Drehmomentwandler durch eine solche Wellen-Nabenverbindung einfach zu montieren. Dazu brauchen Kurbelwelle und Drehmomentwandler nur in axialer Richtung so zusammengeschoben werden, daß die Längsverzahnungen von Welle und Nabe ineinander ragen.

Bei einer bevorzugten Ausführung der Erfindung ist die längsverzahnte Nabe bzw. Welle am Drehmomentwandler und das damit korrespondierende Element der Wellen-Nabenverbindung an der Kurbelwelle angebracht.

Das hat den Vorteil, daß die drehmomentübertragende Verbindung zwischen Kurbelwelle und Drehmomentwandler aus sehr wenigen Teilen besteht, die mit geringem Montageaufwand zusammengebaut werden können.

Dieser Vorteil kommt bei einer weiteren bevorzugten Ausführung der Erfindung noch mehr zum tragen, wenn nämlich die längsverzahnte Welle bzw. Nabe einstückig mit der Kurbelwelle ausgebildet ist.

Bei einer vorteilhaften Ausführung der Erfindung wird zur axialen Festlegung der Wellen-Nabenverbindung eine Axialkraft verwendet, die durch einen Wandlerinnendruck beim Betrieb des Wandlers entsteht.

Eine solche Ausführung hat den Vorteil, daß keine weiteren Maßnahmen zur axialen Sicherung der Wellen-Nabenverbindung unternommen werden müssen. Die aufgrund des Drehmomentwandlerbetriebs entstehende Axialkraft in Richtung der Kurbelwelle preßt die konischen Längsverzahnungen spielfrei ineinander.

Zusätzlich können, bei einer weiteren vorteilhaften Ausführung der Erfindung, zur axialen Festlegung der Weilen-Nabenverbindung, Welle und Nabe noch formschlüssig miteinander verbunden werden.

Dies sichert vorteilhafterweise die Verbindung zwischen Kurbelwelle und Drehmomentwandler auch dann, wenn der Drehmomentwandler nicht in Betrieb ist und somit kein Wandlerinnendruck vorhanden ist. Solche formschlüssige Verbindungen von Welle und Nabe werden durch bekannte Maschinenelemente erreicht, wie zum Beispiel durch eine in einer Umfangsnut der Nabe angebrachte Spannfeder oder durch in radialer Richtung in die Nabe eingedrehte und durch diese hindurchragende Schrauben.

Ein bevorzugtes Ausführungsbeispiel der Erfindung beschreibt die nachfolgende Beschreibung mit der zugehörigen Zeichnung. Es zeigen:

### [Beispiele]

- Figur 1: die Anbindung einer Kurbelwelle an einen Drehmomentwandler gemäß der Erfindung in einem Teilschnitt,
- Figur 2: eine perspektivische Darstellung einer Weilen-Nabenverbindung zur Verbindung von Kurbelwelle und Drehmomentwandler,
- Figur 3: eine weitere Ausführungsform des Anschlusses einer Kurbelwelle an einen Drehmomentwandler gemäß der Erfindung,
- Figur 4: eine Anbindung einer Kurbelwelle an einen Drehmomentwandler gemäß Figur 3 mit axialer Sicherung durch eine Schraube und
- Figur 5: eine weitere axiale Sicherung durch eine Spannfeder bei einer Anordnung gemäß Figur 3.

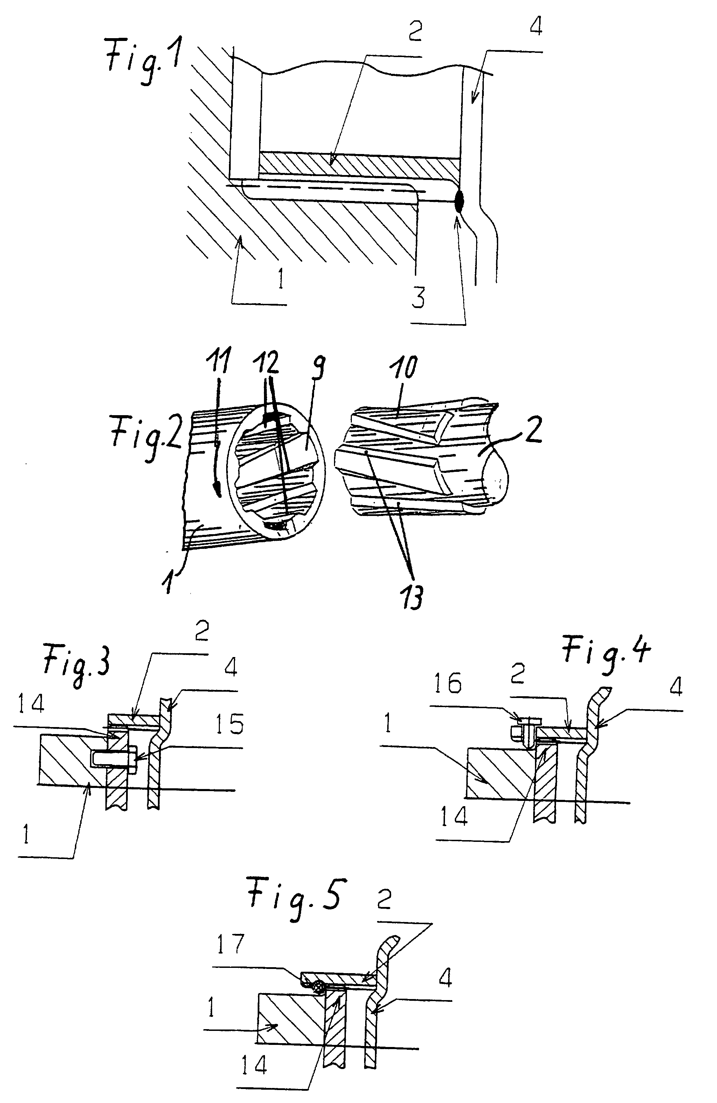

Figur 1 zeigt einen Endabschnitt einer Kurbelwelle 1, als längsverzahnte Welle ausgebildet, eingeschoben in einen als längsverzahnte Nabe ausgebildeten Antriebsflansch 2 eines hydrodynamischen Drehmomentwandlers. Der Antriebsflansch 2 ist durch eine Schweißnaht 3 fest mit dem Gehäuse 4 des Drehmomentwandlers verbunden. Die Längsverzahnungen der Wellen-Nabenverbindung besitzen in Längsrichtung der Zähne sich vergrößernde bzw. verkleinernde Zahnquerschnitte. Das Gehäuse 4 ist bezüglich der Kurbelwelle 1 axial verschiebbar. Aufgrund dessen verschiebt der beim Betrieb des Drehmomentwandlers entstehende Wandlerinnendruck das Gehäuse 4 mit dem Antriebsflansch 2 in Richtung der Kurbelwelle 1 und zwar bis die Wellen-Nabenverbindung aufgrund der sich vergrößernden bzw. verkleinernden Zahnquerschnitte an Welle bzw. Nabe spielfrei ist. Das bedeutet, daß der Antriebsflansch 2 von der Kurbelwelle 1 in axialer Richtung über die Längsverzahnung abgestützt wird.

Figur 2 zeigt das Ende der Kurbelwelle 1 als Nabe und den Antriebsflansch 2 als Welle ausgebildet mit der Innenverzahnung 9 der Kurbelwelle 1 und der Außenverzahnung 10 des Antriebsflansches 2. Durch Ineinanderschieben werden Kurbelwelle 1 und Antriebsflansch 2 formschlüssig miteinander verbunden. Dreht sich die Kurbelwelle 1 in der durch den Pfeil 11 gekennzeichneten Richtung und wird Drehmoment von der Kurbelwelle 1 auf den Antriebsflansch 2 übertragen, erfolgt die Kraftübertragung über die Flanken 12, deren Verlauf in dieser Ausführungsform so gewählt ist, daß sich die durch die Verzahnung miteinander verbundenen Teile selbsttätig gegeneinander pressen. Aufgrund der sich in Längsrichtung der Zähne vergrößernden bzw. verkleinernden Zahnquerschnitte und aufgrund des Wandlerinnendrucks, der den Antriebsflansch 2 axial in Richtung der Kurbelwelle 1 belastet, entsteht Spielfreiheit an den kraftübertragenden Zahnflanken 12,13 der lösbaren Antriebsverbindung. Selbst bei Belastungsstößen bzw. -schwankungen ist durch die Axialkraft aus dem Wandlerinnendruck und durch den Verlauf der Längsverzahnung gewährleistet, daß eine Trennung der Zahnflanken 12 der Kurbelwelle 1 und der Zahnflanken 13 des Antriebsflansches 2 verhindert wird.

Unabhängig von der Ausführung in Figur 2 ist aber auch denkbar, daß die Längsverzahnung der Wellen-Nabenverbindung, mit in Längsrichtung der Zähne sich vergrößernden bzw. verkleinernden Zahnquerschnitten, ausschließlich in axialer Richtung verläuft. In diesem Fall bewirkt allein der Wandlerinnendruck die Spielfreiheit zwischen den Zahnflanken 12 und den Zahnflanken 13. Ebenso bei einer weiteren, nicht gezeichneten Ausführungsform, bei der die Längsverzahnung durch ineinanderragende, keilförmige Klauen einer Stirnverzahnung ersetzt ist. Der Keilwinkel der Klauen sollte dann etwa im Bereich der Selbsthemmungsgrenze liegen.

Figur 3 zeigt eine andere Ausführungsform der Anbindung der Kurbelwelle 1 an das Gehäuse 4 des Drehmomentwandlers. Hier ist der Antriebsflansch 2 als Nabe ausgebildet, während ein Zahnkranz 14, mit Schrauben 15 am Ende der Kurbelwelle 1 befestigt, der Welle entspricht, die mit der Nabe die lösbare Antriebsverbindung bildet.

Figur 4 und Figur 5 zeigen Antriebsverbindungen zwischen Kurbelwelle 1 und Gehäuse 4 des Drehmomentwandlers entsprechend Figur 3, allerdings mit einer weiteren Formschlußverbindung zwischen Welle und Nabe als zusätzliche Befestigungseinrichtung zur Aufrechterhaltung der Verbindung in axialer Richtung.

In Figur 4 hintergreift eine in radialer Richtung den Antriebsflansch 2 durchdringende Sicherungsschraube 16 den Zahnkranz 14 der Kurbelwelle 1. So wird für den Fall, daß kein Wandlerinnendruck vorhanden ist, das Lösen der Antriebsverbindung in axialer Richtung verhindert.

In der Ausführung entsprechend Figur 5 wird dasselbe bewirkt, allerdings durch eine Spannfeder 17, die den Zahnkranz 14 der Kurbelwelle 1 hintergreift. Die Spannfeder 17 sitzt in einer Umfangsnut an dem als Nabe ausgebildeten Antriebsflansch 2.

## Patentansprüche

1. Antriebsverbindung zur Drehmomentübertragung im Antriebsstrang eines Kraftfahrzeugs, durch eine mit Längsverzahnungen versehene Wellen-Nabenverbindung für lösbares Verbinden einer Kurbelwelle (1) mit einem gleichachsig angeordneten hydrodynamischen Drehmomentwandler (4), **dadurch gekennzeichnet, dass** die Längsverzahnungen der Wellen-Nabenverbindung in Längsrichtung der Zähne sich vergrößernde bzw. verkleinernde Zahnquerschnitte besitzen, so dass bei axialer Verspannung der Wellennabenverbindung Spielfreiheit entsteht.

2. Antriebsverbindung nach Anspruch 1, **dadurch gekennzeichnet, daß** die längsverzahnte Nabe bzw. Welle am Drehmomentwandlergehäuse (4) angebracht ist.

3. Antriebsverbindung nach Anspruch 1 oder 2, **dadurch gekennzeichnet, daß** die längsverzahnte Welle bzw. Nabe an der Kurbelwelle (1) angebracht ist.

4. Antriebsverbindung nach Anspruch 3, **dadurch gekennzeichnet, daß** die längsverzahnte Welle bzw. Nabe einstückig mit der Kurbelwelle (1) ausgebildet ist.

5. Antriebsverbindung nach einem der Ansprüche 1 bis 4, **dadurch gekennzeichnet, daß** zur axialen Festlegung der Wellen-Nabenverbindung eine Axialkraft verwendet wird, die durch einen Wandlerinnendruck beim Betrieb des Drehmomentwandlers entsteht.

6. Antriebsverbindung nach einem der Ansprüche 1 bis 5, **dadurch gekennzeichnet, daß** zur axialen Festlegung der Wellen-Nabenverbindung Welle und Nabe miteinander durch eine weitere Formschlußverbindung verbunden sind, insbesondere durch eine Sicherungsschraube (16) oder eine Spannfeder (17).

## Claims

1. A drive connection for transmitting torque in the line of drive shafts of a motor vehicle, via a longitudinally toothed hub and shaft connection for releasably connecting a crankshaft (1) to a coaxial hydrodynamic torque converter (4), **characterised in that** the longitudinal teeth on the hub and shaft connection have cross-sections which increase or decrease in the longitudinal direction of the teeth, so that there is no clearance when the shaft-hub connection is axially clamped.

2. A drive connection according to claim 1, **characterised in that** the longitudinally toothed hub or shaft is mounted on the torque converter casing (4).

3. A drive connection according to claim 1 or claim 2, **characterised in that** the longitudinally toothed shaft or hub is mounted on the crankshaft (1).

4. A drive connection according to claim 3, **characterised in that** the longitudinally toothed shaft or hub is integral with the crankshaft (1).

5. A drive connection according to any of claims 1 to 4, **characterised in that** the shaft-hub connection is secured by an axial force which originates inside the torque converter during operation.

6. A drive connection according to any of claims 1 to 5, **characterised in that** in order axially to secure the shaft and hub connection, the shaft and hub are connected by additional positive engagement, especially by a securing screw (16) or a tension spring (17).

## Revendications

1. Connexion d'entraînement pour transmettre un couple dans la ligne de transmission d'un véhicule à l'aide d'une connexion à arbre/moyeu munie de dents longitudinales pour relier de manière amovible un vilebrequin (1) à un convertisseur de couple (4) hydrodynamique, coaxial,
**caractérisée en ce que**
les dentures longitudinales de la connexion arbre/moyeu ont une section de dent qui augmente ou diminue dans la direction longitudinale des dents de sorte qu'en cas de serrage axial de la liaison de connexion d'arbre, il n'y aura plus de jeu.

2. Connexion d'entraînement selon la revendication 1,
**caractérisée en ce que**
le moyeu ou arbre à dentures longitudinales est prévu sur le boîtier (4) du convertisseur de couple.

3. Connexion d'entraînement selon la revendication 1 ou 2,
**caractérisée en ce que**
l'arbre ou moyeu à dentures longitudinales est prévu sur le vilebrequin (1).

4. Connexion d'entraînement selon la revendication 3,
**caractérisée en ce que**
l'arbre ou moyeu à dentures longitudinales est réalisé en une seule pièce avec le vilebrequin (1).

5. Connexion d'entraînement selon l'une des revendications 1 à 4,
**caractérisée en ce que**
pour la fixation axiale de la liaison arbre/moyeu, on utilise une force axiale créée par la pression intérieure du convertisseur lorsque le convertisseur de couple fonctionne.

6. Connexion d'entraînement selon l'une des revendications 1 à 5,
**caractérisée en ce que**
pour la fixation axiale de la connexion arbre/moyeu, on relie l'arbre et le moyeu l'un à l'autre par une autre liaison de forme notamment par une vis de blocage (16) ou un ressort de tension (17).
